# EUROPEAN PATENT APPLICATION

(11) **EP 1 884 741 A1**
(43) Date of publication of application: **06.02.2008**
(21) Application number: 07113446.4
(22) Date of filing: 30.07.2007
(51) Int. Cl.: G01C 19/72

(54) **Fiber optic gyroscope having a silicon-based optical chip**

(30) Priority: 31.07.2006 US 497020
(71) Applicant: Honeywell International Inc., Morristown, NJ 07962 (US)
(72) Inventor: Sanders, Glen A, Scottsdale, AZ 85255 (US)
(74) Representative: Haley, Stephen

(57) **Abstract**

According to one aspect of the present invention, a fiber optic gyroscope is provided. A substrate has a silicon layer formed over an insulating layer, a waveguide formed within the silicon layer having a main optical channel, first and second splitters coupled at opposing ends of the main optical channel, first and second segments coupled to the first splitter, and third and fourth segments coupled to the second splitter. A fiber optic coil has a first end coupled to third segment of the waveguide and a second end coupled to the fourth segment of the waveguide. A light source is coupled to the first segment of the waveguide to emit light into the waveguide. A photo-detector coupled to the second segment of the waveguide to capture at least some the light and detect interference therebetween.

## Description

The present invention generally relates to gyroscope systems, and more particularly relates to an optical chip for use in a fiber optic gyroscope and a fiber optic gyroscope incorporating the optical chip.

In recent years, interferometer fiber optic gyroscopes (IFOGs) have become widely used in several technologies to sense the rotation and angular orientation of various objects, such as aerospace vehicles. An IFOG typically includes an optical fiber, often several kilometers in length, wound in a coil about an axis of rotation (i.e., the rotation to be sensed). Light is injected in opposite directions through the coil and directed onto a photo-detector. If the coil is rotated about the axis, the effective optical path length for the light traveling in one direction in the coil is increased, while the path length is decreased for the light traveling in the opposite direction. The difference in path length introduces a phase shift between the light waves traveling in opposite directions, known as the Sagnac Effect. As a result, an interference pattern is detected by the photo-detector, which indicates that the IFOG is experiencing rotation.

In most applications especially those requiring higher performance, IFOGs"must employ what is known as a "minimum reciprocal configuration." The minimum reciprocal configuration ensures that the counterpropagating portions of light travel the same optical path length, aside from the difference caused by rotation rate, before being captured by the photo-detector. The minimum reciprocal configuration is generally provided by two optical splitters, as well as a polarizer and a spatial filter between the two optical filters. The spatial filter typically operates by guiding light in a desired spatial portion, or mode, and spatially separating it from light in other spatial distributions, or unwanted modes.

In recent years, lithium niobate (LiNbO₃) optical chips have been used to house one of the optical splitters and a phase modulator to increase the sensitivity of the IFOG and, due to the intrinsic properties thereof, to polarize the light as it passes therethrough. However, lithium niobate does not perform well as a spatial filter because the waveguide on such substrates is relatively short and unwanted light may be carried in the substrate. The unwanted light may travel nearly co-linearly with the light in the waveguide and couple back into it, or it may be detected by the resulting in large errors in the gyro output. The possibility of spatially separating the unwanted modes or substrate light from the main waveguide carrying the signal light is thwarted by the fact that the waveguides in lithium niobate cannot be sharply bent, ruining the possibility of sharply turning the guided signal light so that it is guided in a direction away from the unwanted light. Typically, waveguides formed therein may only be able to re-direct (i.e., curve or bend) light by very small angles, such as between 3 and 5 degrees. As a result, the spatial filter, as well as the second splitter, must be included outside of the lithium niobate substrate, which can increase the size and the costs involved in manufacturing IFOGs utilizing lithium niobate substrates. Additionally, because of limitations in the processing and material properties of lithium niobate, it is generally not possible to integrate various other components, such as the photo-detector, and electronics into the same substrate as the waveguide.

Accordingly, it is desirable to provide a fiber optic gyroscope with an increased number of components integrated onto a single substrate. Furthermore, other desirable features and characteristics of the present invention will become apparent from the subsequent detailed description and the appended claims, taken in conjunction with the accompanying drawings and the foregoing technical field and background.

A fiber optic gyroscope is provided. A substrate has a silicon layer formed over an insulating layer. A waveguide is formed within the silicon layer having a main optical channel, first and second splitters at opposing ends of the main optical channel, first and second segments coupled to the first splitter, and third and fourth segments coupled to the second splitter. A fiber optic coil has a first end coupled to the third segment of the waveguide and a second end coupled to the fourth segment of the waveguide. A light source is coupled to the first segment of the waveguide to emit light into the waveguide in a first direction. The waveguide is configured such that the light propagates through the first segment, the first splitter, and the main optical channel and is split into first and second portions by the second splitter. The first and second portions respectively propagate through the third and fourth segments of the waveguide, around the fiber optic coil, and through the third and fourth segments and the second splitter, and are combined into signal light in the main optical channel. The signal light then propagates through the main optical channel in a second direction and is split by the first splitter such that at least some of the signal light is emitted from an end of the second segment. A photo-detector is coupled to the second segment of the waveguide to capture the at least some of the signal light and detect interference between the first and second portions of light.

### IN THE DRAWINGS

The present invention will hereinafter be described in conjunction with the following drawing figures, wherein like numerals denote like elements, and

Figure I is a schematic view of a fiber optic gyroscope system including a substrate according to one embodiment of the present invention;

Figure 2 is a top plan view of a portion of the substrate of Figure 1 taken on Detail A;

Figure 3 is a cross-sectional side view of the portion of the substrate of Figure 2 taken along line 3-3;

Figure 4 is a top plan view of a portion of the substrate of Figure 1 taken on Detail B;

Figure 5 is a cross-sectional side view of the portion of the substrate of Figure 4 taken along line 5-5;

Figure 6 is a top plan view of a lower portion of the substrate of Figure 1 illustrating operation thereof;

Figure 7 is a top plan view of an upper portion of the substrate of Figure 1 further illustrating operation thereof; and

Figure 8 is a cross-sectional side view of a substrate according to another embodiment of the present invention.

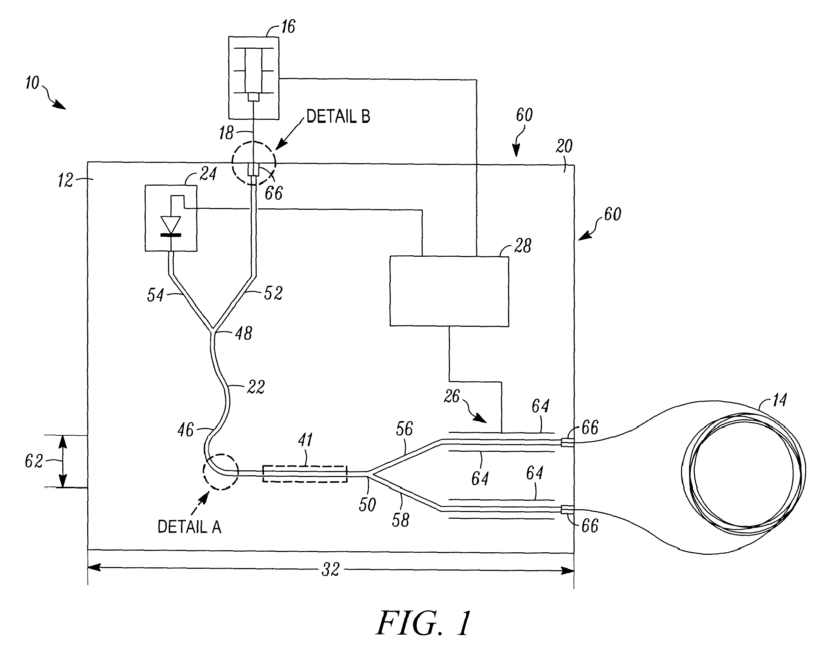

The following detailed description is merely exemplary in nature and is not intended to limit the invention or the application and uses of the invention. Furthermore, there is no intention to be bound by any expressed or implied theory presented in the preceding technical field, background, brief summary or the following detailed description. It should also be noted that Figures 1 - 8 are merely illustrative and may not be drawn to scale.

Figure 1 illustrates a fiber optic gyroscope system (or an interferometric fiber optic gyroscope (IFOG)) 10, according to one embodiment of the present invention. The system 10 includes an integrated optical chip (IOC) 12, a fiber sensing loop (or fiber optic coil) 14, a light source 16, and an optical fiber 18.

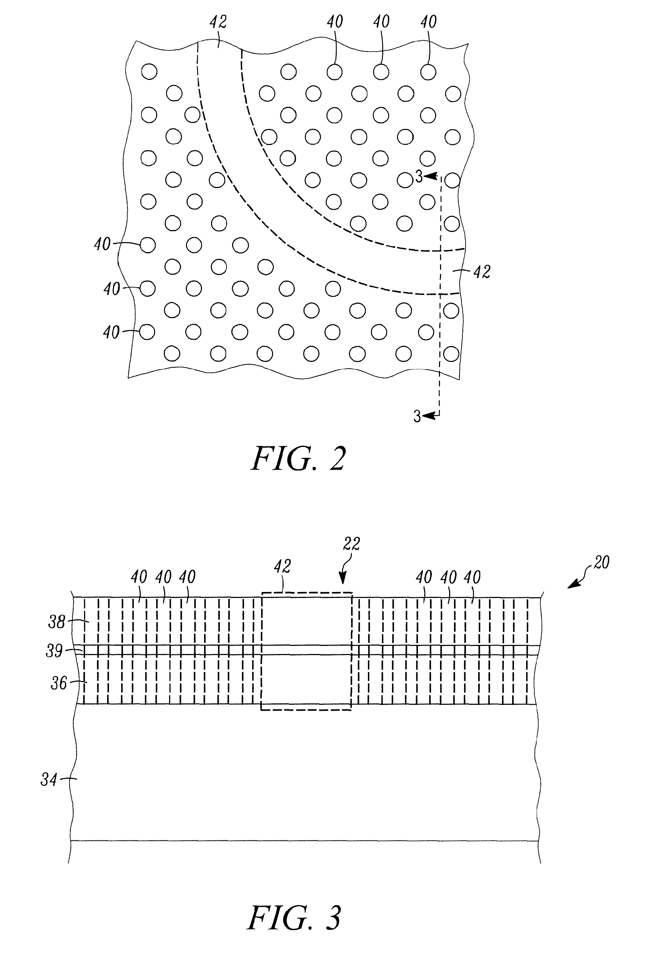

The IOC 12 includes a substrate 20 with a waveguide 22, a photo-detector 24, a phase modulator 26, and a controller 28 formed thereon. Still referring to Figure 1, in the depicted embodiment, the substrate 20 is substantially square or rectangular in shape with a side length 32 of, for example, less than 3 cm, or between about 5 mm and about 1.5 cm. Looking ahead to Figure 3, the substrate 20 includes a first (or lower) silicon (Si) layer 34, an insulating layer 36, and a second (or upper) silicon layer 39. The substrate may also include a second insulating layer 38. The total thickness of the substrate 20 may be around 10 milli-inches, most of which is attributed to the thickness of the first silicon layer 34.. The insulating layers 36 and 38 are made of an insulating material, such as silicon dioxide (SiO₂) and may be formed on the first silicon layer 34 and second silicon layer 39. The thickness of the insulating layers 36 and 38 and the second silicon layer 39 between is, for example, between about 400 and about 700 microns. The substrate 20 may thus be in the form of a silicon-on-insulator (SOI) substrate, as is commonly understood. The light is confined within the second silicon layer 39 by virtue of the index difference (silicon being higher) between the layer 39 and the surrounding insulating layers 36 and 38. The substrate 20, and/or the various layers within, as illustrated in Figure 3, may be formed using, for example, chemical vapor deposition (CVD), bonding, and thermal growth processes, or a combination thereof, as is commonly understood. In some designs it may be possible to omit the second insulating layer 38, since vertical mode confinement in the second silicon layer 39 will still take place if air is above it instead of the insulating material.

Referring again to Figure 1, the substrate 20 may also include a polarizing element 41 (or polarizer) within it, or placed onto it, which ensures that the requirements for the minimum reciprocal configuration are satisfied. This may be done be adding an extra layer, such as a metallic layer in close proximity to the light guiding region in the vicinity of the waveguide 22 in region of polarizer 41. Alternatively, polarizer 41 may include a trench in which the waveguide 22 is interrupted and a micro-optic polarizer or polarizing crystal is inserted. However, lensing may be required to collimate the beam exiting the waveguide 22 and re-entering the waveguide 22 after traversing the micro-optic polarizer. Although the substrate 20 is illustrated as being singulated, it should be understood that the substrate 20 may be a portion of a semiconductor wafer with a diameter of, for example, approximately 150, 200, or 300 millimeters. Additionally, the substrate 20 may constitute one of multiple dies, or "dice," into which the wafer is divided, as commonly understood in the art.

Referring to Figures 2 and 3, the substrate 20 also includes a plurality of holes 40 through the layers 38, 39, and 36 forming a photonic crystalline structure or a photonic band gap periodic structure. The holes 40 may be formed using, for example, a dry etching process based on fluorocarbon discharge, as is commonly understood. In region, or area, 42 the substrate 20 is unoccupied by the holes 40. The unoccupied area 42 defines the waveguide 22, as will be described in greater detail below. It should be noted that in the waveguide 22 shown in Figure 3, the light is confined to a single spatial mode via an index difference (i.e., index guiding) in the vertical direction, and via the photonic bandgap effect in the horizontal direction. An alternative embodiment may use a conventional ridge waveguide structure to confine the light into a single, tightly guided mode in the lateral direction, as in silicon, the difference between the indices of refraction of silicon and silicon dioxide is large. In this implementation, the second silicon layer is removed, for example, via etching, except for a laterally-thin square ridge which is used to conduct the light. Again, silicon dioxide may be deposited on top of the waveguide region, and on its sides, to confine the light.

As shown in Figure 1, the waveguide 22 includes a main channel 46, a first splitter 48, a second splitter 50, and first, second, third, and fourth segments 52, 54, 56, and 58. In the embodiment illustrated, the main channel 46 has an "elbow-shape" and/or a "s-bend" such that the ends thereof are substantially perpendicular and directed towards device sides 60 of the substrate 20. The main channel 46 may have a radius of curvature 62 of, for example, between about 5 microns and about 0.5 cm. The first and second splitters (or Y-splitters) 48 and 50 are connected to the opposing ends of the main channel 46, and similar to the main channel 46, are defined by the previously described unoccupied areas 42, which are not specifically illustrated in Figure 1, or by a previously described ridge waveguide. The first and second segments 52 and 54 are connected to the first splitter 48 with the first segment 52 leading to a central portion of the device side and the second segment 54 leading to a corner region of the substrate 20. The third and fourth segments 56 and 58 are connected to the second splitter 50 and lead to an outer portion of the device side 60 of the substrate 20. Like the other portions of the waveguide 22, segments 52, 54, 56, and 58 are defined by the previously described unoccupied areas 42 of the second silicon layer 39, or by a conventional ridge waveguide..

The photo-detector 24 is adjacent to an end of the second segment 54 of the waveguide 22. Although not shown in detail, the photo-detector 24, in a preferred embodiment, includes a photodiode therein including a germanium-doped region formed within the second silicon layer 39. The photo-detector 24 may also be a discrete photo-detector chip made of germanium or indium gallium arsenide phosphide (InGaAsP). The phase modulator 26 is formed on the substrate 20 and, in the depicted embodiment, includes four electrodes 62. Although not illustrated in detail, each of the electrodes 62 may include a conductive line, pad, or trace, formed in the substrate 20 near the waveguide 22. These electrodes 62 may be of any suitable conductive material, such as copper, aluminum, or gold so as to allow an electrical signal to vary the injection of carriers into the waveguide area to modulate its index. The locations of the electrodes 62 depend on where the signal is originated (for access) and the exact geometry of the waveguide 22. The electrodes 62 may be arranged in pairs with each pair in close proximity to the third and fourth segments 56 and 58 of the waveguide, respectively.

The controller 28 (or processing subsystem), in one embodiment, is formed on or within the substrate 20, and as will be appreciated by one skilled in the art, may include electronic components, including various circuitry and integrated circuits, such as an Application Specific Integration Circuit (ASIC) and/or instructions stored on a computer readable medium to be carried out by a computing system and perform the methods and processes described below. Although not specifically illustrated, the controller 28 may include an analog-to-digital converter (ADC), a microprocessor or digital gate array, a digital-to-analog converter (DAC), and several amplifiers. A first amplifier may be connected to an output of the photo-detector 24 to provide suitable signal buffer and to increase or decrease the overall gain of the output signal received from the photo-detector 24. The ADC converts the analog signal received from either the first amplifier, if included, or the photo-detector 24 into digital data representative thereof and supplies the digital data to the microprocessor or digital gate array. The DAC and a second amplifier, if included, are sequentially connected to an output of the microprocessor. The DAC, as is generally known, converts digital data supplied from the microprocessor into analog signals representative thereof. An output of the second amplifier, if included, is connected to the phase modulators within the segments 56 and 58. The microprocessor or digital gate array is coupled between the ADC and the DAC. As shown, the controller 28 is in operable communication with the light source 16, the photo-detector 24, and the phase modulator 62.

The light source 16 is any light source typically used in fiber optic gyroscopes, such as a Fiber Light Source (FLS) assembly. In one embodiment, the light source includes a 980 nm semiconductor pump laser diode, and an erbium doped fiber (EDF) capable of generating light with a wavelength of approximately 1532 nm with an approximate bandwidth of about 10nm to 35 nm. The semiconductor pump laser diode is used for optically pumping the erbium doped fiber so that it emits broadband light.

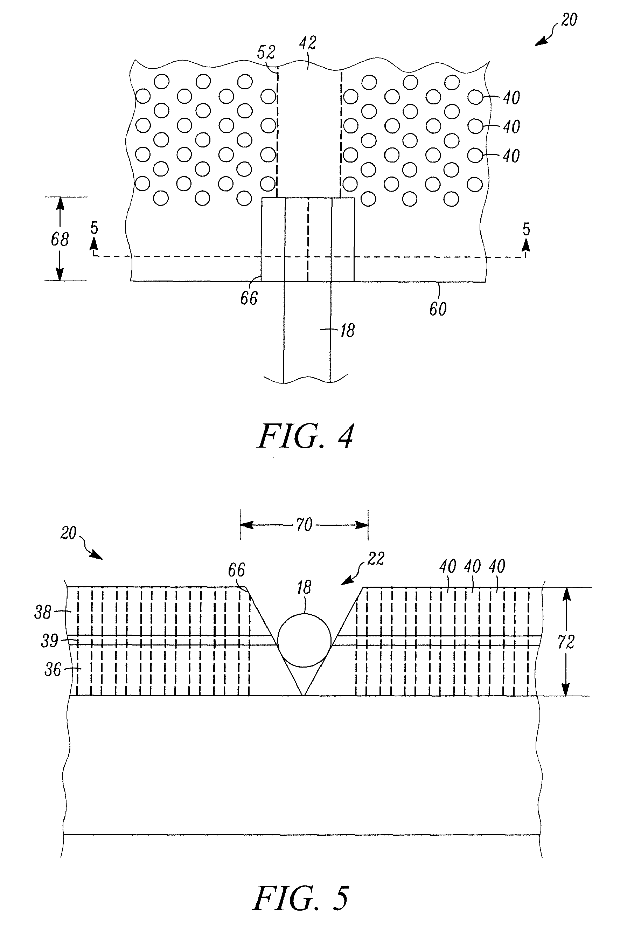

The substrate 20 may also include a plurality of v-grooves 66 formed along the device sides 60. Each v-groove 66 interconnects a respective segment of the waveguide 22 and one of the ends of the fiber optic coil 14 and the end of the optical fiber 18. Figures 4 and 5 illustrate the v-groove 66 interconnecting the first segment 52 of the waveguide 22 and the optical fiber 18. As shown in Figure 4, the v-groove 66 has, for example, a length 68 of between about 100 and about 2000 microns. Referring to Figure 5, the v-groove 66 has a width 70 and a depth 72 such that the v-groove 66 is sized to support the optical fiber 18 (or the ends of the fiber optic coil 14) such that the optical fiber 18 is aligned with the first segment 52 of the waveguide 22. The depth 72 of the v-groove 66 may be greater than the thickness of the second silicon layer 39 such that the v-groove 66 extends into the insulating layer 36.

Referring again to Figure 1, the fiber optic coil 14 is a winding of fiber optical cable having a length of, for example, between about 1 km and about 6 km positioned about an axis of rotation (not shown). First and second ends of the fiber optic coil 14 are connected to the substrate 20, and thus aligned with the third and fourth segments 56 and 58 of the waveguide 22, in a manner similar to the optical fiber 18, as shown in Figures 4 and 5.

During operation, the controller 28 activates the light source 16, which emits light through the optical fiber 18 and into the first segment 52 of the waveguide 22. The light passes through the first segment 52, past the first splitter 48, and into the main optical channel 22 where it is directed toward the second splitter 50. As the light passes through the second splitter 50, the light is split into first and second portions. The first portion propagates through the third segment 56 of the waveguide 22 to the fiber optic coil 14 and traverses through the coil 14 in a clockwise direction. The second portion propagates through the fourth segment 58 towards the fiber optic coil 14 and traverses through the coil 14 in a counterclockwise direction. As the first and second portions of light pass through the phase modulator 26, the controller 28 implements, for example, a square wave bias modulation technique, as is commonly understood in the art, to increase the sensitivity of the IFOG 10. The depth of the modulation may be selected at different phase points depending on the specific application. Examples include ±π/2, ±3π/4, ±7π/8, and ±15π/16.

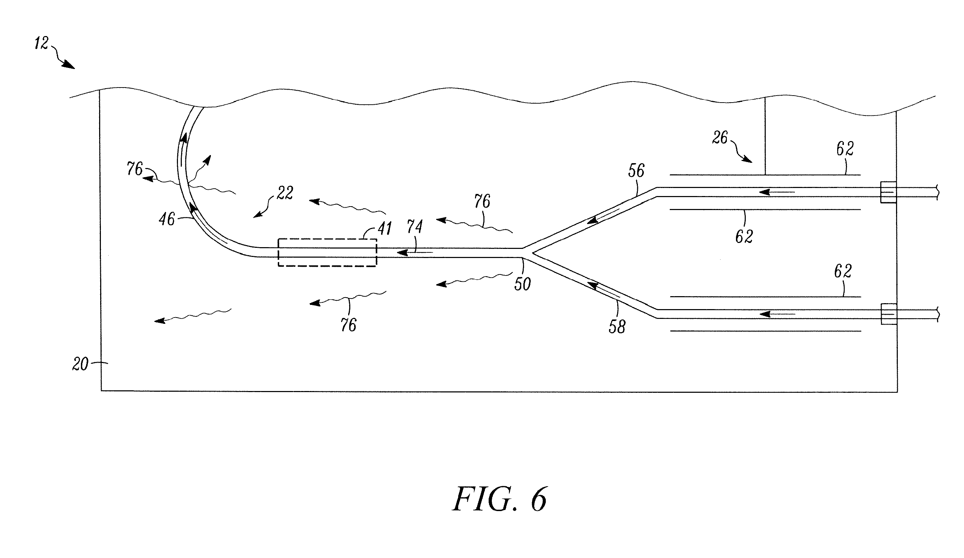

Figure 6 illustrates a lower portion of the substrate 20 during operation. As the first and second portions of light return from the fiber optic coil 14 to the second splitter 50, the majority of the first and second portions of light remains within the waveguide 22 (i.e., signal light 74) and propagates down the main channel 46. However, some of the first and second portions of light may pass from the waveguide 22 laterally into the second silicon layer 38 (i.e., transmission light 76), as shown in Figure 1, or may leak into the insulating layers and propagate collinearly or nearly collinearly with the signal light 74.. The signal light 74 follows the path of the main channel 46 of the waveguide 22 and is thus curved towards an upper portion of the substrate 20. As will be appreciated by one skilled in the art, the polarizer 41 greatly attenuates one possible polarization of light in waveguide 22 ensuring reciprocity conditions. The transmission light 76 continues to spread throughout the substrate 20 and is preferably prevented from re-entering the waveguide 22 and/or being detected by the detector 24.

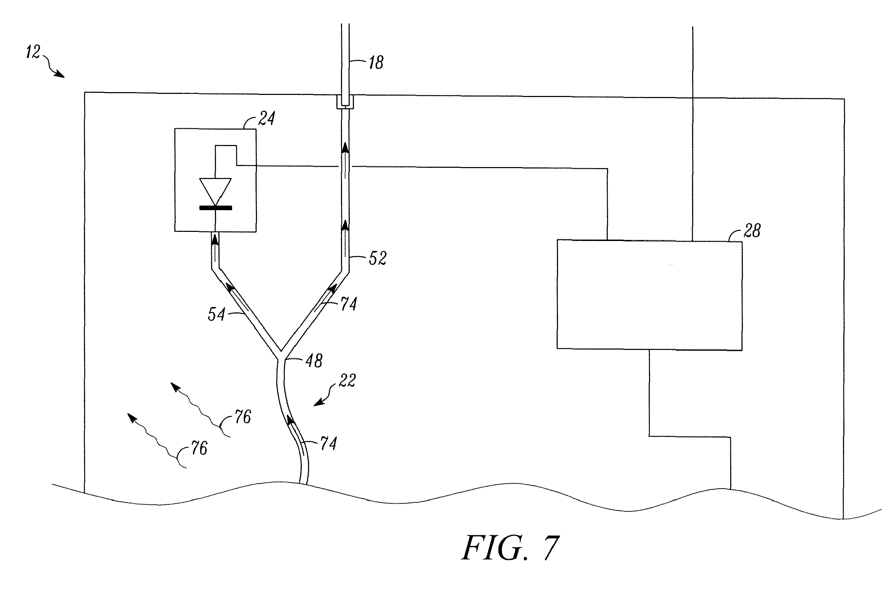

Figure 7 illustrates the upper portion of the substrate 20 during operation. As shown, the signal light 74 continues to follow the waveguide 22 to the first splitter 48. The first splitter 48 splits the signal light 74 such that one portion propagates to the photo-detector 24 and another portion propagates to the optical fiber 18. Referring to Figure 6 in combination with Figure 7, the curved shape of the waveguide 22, in particular the main channel 46 of the waveguide 22, causes the signal light 74 to be filtered, or separated, from the transmission light 76. In one embodiment, the waveguide 22 is shaped such that the signal light 74 is re-directed (or turned) more than 90 degrees between propagating from the coil 14 to the photo-detector 24. This greatly attenuates the ability of the transmission light 76 to couple into the waveguide 22 or reach the photo-detector 24. As will be appreciated by one skilled in the art, the filtering (i.e., spatial filtering) performed by the shape of the waveguide 22 ensures that light in only one spatial mode of the desired signal light is propagated to the photo-detector 24.

As such, at least some of the signal light 74 (i.e., at least some of the first and second portions of the signal light 74) is captured by the photo-detector 24. However, as shown, the component of transmission light 76 (e.g., originated from the first and second splitters 48 and 50) propagating toward the photo-detector 24 is greatly diminished. Any transmission light 76 propagating towards the photo-detector 24, due to the orientation of the waveguide 22, and the orientation of the active element in the photo-detector 24, will pass by the photo-detector 24 without being captured. Therefore, substantially none of the transmission light 76 is captured by the photo-detector 24, and at least some of the signal light 74 is captured by the photo-detector 24.

Of particular interest in Figures 1, 6, and 7 is that as the signal light 74 passes through the second splitter 50 and the first splitter 48, the signal light 74 is polarized within the waveguide by the polarizer 41 and spatially filtered due to the shape of the waveguide 22. The IFOG 10 may thus be considered to be in a "minimum reciprocal configuration," as is commonly understood in the art. As a result, any difference in the optical paths lengths traveled by the first and second portions of light that are captured by the photo-detector is due only to rotation of the IFOG 10 about the axis of rotation of the coil 14. That is, when the IFOG 10 is not experiencing any rotation, the optical path lengths traveled by the first and second portions of light are identical.

The photo-detector 24 receives the portion of the signal light 74 from the second segment 54 of the waveguide, and as is commonly understood, generates a signal representative of any interference pattern between the first and second portions of the signal light 74 due to rotation of the IFOG 12 about the axis of the fiber optic coil 14. The controller 28 processes the signal from the photo-detector 24 and calculates the rotational rate of the IFOG 10 therefrom.

One advantage of the system described above is that the waveguide, the photo-detector, the phase modulator, and the controller are integrated onto a single substrate (i.e., microelectronic die or semiconductor chip). Therefore, the overall size and manufacturing costs of the IFOG are minimized. Another advantage is that because the substrate is made of silicon, the various features on the substrate may be formed using standard semiconductor processing techniques, thereby further reducing the costs of manufacturing the IFOG. A further advantage is that because of the ability of the silicon waveguide to accommodate tight radii, which is accentuated with the photonic crystals structures, the radius of curvature of the waveguide can be minimized to provide the highly efficient spatial filtering as is required for the IFOG to function properly. As a result, the size of the substrate can be minimized even further.

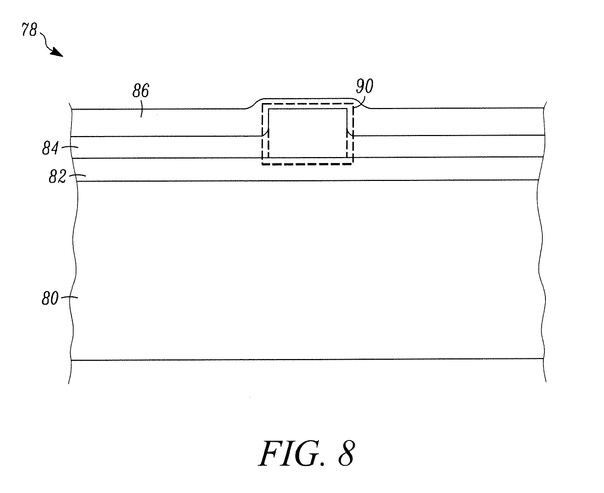

Figure 8 illustrates a substrate 78 for use in the IFOG 10, according to another embodiment of the present invention. The substrate 78 includes a first (or lower) silicon layer 80, a first insulating layer 82, a second (or upper) silicon layer 84, and a second insulating layer 86. The substrate 78 may be formed using the same materials and in a manner similar to the substrate 20 described above. However, the second silicon layer 84 may not include photonic cells, and a waveguide 90 may be formed because of the differences in the indices of refraction between the second silicon layer 84 and the first insulating layer 82 along with the second insulating layer 86. The waveguide 90 may be referred to as a "ridge waveguide," and although not shown, may me utilized in various portions of the substrate 20 shown in Figure 1, such as near the phase modulator 26 and/or within the third and fourth segments 56 and 58 of the waveguide 22.

Other embodiments may utilize a different shape for the waveguide, such as different combinations of S-shapes or an L-shape. Thus, the various components of the IFOG, such as the light source, may be repositioned relative to the other components. For example, the light source may be coupled to any side of the substrate, such as the side opposing the fiber optic coil. The light source may also be in the form of a broadband super-radiant diode (SRD) that is mounted on the substrate and coupled to the waveguide.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing the exemplary embodiment or exemplary embodiments. It should be understood that various changes can be made in the function and arrangement of elements without departing from the scope of the invention as set forth in the appended claims and the legal equivalents thereof.

## Claims

1. A fiber optic gyroscope comprising:
a substrate (20) having a silicon layer (39) formed over an insulating layer (36);
a waveguide (22) formed within the silicon layer (39) having a main optical channel (46), first and second splitters (48, 50) at opposing ends of the main optical channel (46), first and second segments (52, 54) coupled to the first splitter (48), and third and fourth segments (56, 58) coupled to the second splitter (50);
a fiber optic coil (14) having a first end coupled to the third segment (56) of the waveguide (22) and a second end coupled to the fourth segment (58) of the waveguide (22);
a light source (16) coupled to the first segment (52) of the waveguide (22) to emit light into the waveguide (22) in a first direction, the waveguide (22) being configured such that the light propagates through the first segment (52), the first splitter (48), and the main optical channel (46) and is split into first and second portions by the second splitter (50) and the first and second portions respectively propagate through the third and fourth segments (56, 58) of the waveguide (22), around the fiber optic coil (14), and through the third and fourth segments (56, 58) and the second splitter (50), and are combined into signal light in the main optical channel (46), the signal light propagating through the main optical channel (46) in a second direction and being split by the first splitter (48) such that at least some of the signal light is emitted from an end of the second segment (54); and
a photo-detector (24) coupled to the second segment (54) of the waveguide (22) to capture the signal light and detect interference between the first and second portions of light.

2. The fiber optic gyroscope of claim 1, wherein the first portion of light and the second portion of light travel substantially equal optical path lengths between said splitting by the second splitter (50) and said capturing of the signal light by the photo-detector (24).

3. The fiber optic gyroscope of claim 2, further comprising a polarizer (41) coupled to the substrate (20) such that the signal light has traveled in only one polarization state during said propagation between the first splitter (48) and the second splitter (50).

4. The fiber optic gyroscope of claim 3, wherein the waveguide (22) is further configured to re-direct the signal light at least 90 degrees between said propagation from the fiber optic coil (14) to the photo-detector (24).

5. The fiber optic gyroscope of claim 4, wherein the substrate (20) has at least one dimension that is less than 3 cm.

6. The fiber optic gyroscope of claim 5, wherein the photo-detector (24) is formed on the substrate (20).

7. The fiber optic gyroscope of claim 6 wherein the photo-detector (24) comprises germanium-doped region formed on the substrate (20).

8. The fiber optic gyroscope of claim 7, further comprising an optical fiber (18) interconnecting the light source (16) and the first segment (52) of the waveguide (22).

9. The fiber optic gyroscope of claim 8, wherein the substrate (20) has a polygonal shape and the first and second ends of the fiber optic coil (14) are inserted into a first side of the substrate (20), the optical fiber (18) is inserted into a second side of the substrate (20, and the first, third, and fourth segments (52, 54, 56, 58) of the waveguide (22) substantially extend to one of the first and second sides of the substrate (20).

10. A fiber optic gyroscope comprising:
a substrate (20) having a silicon layer (39) formed over an insulating layer (36);
a waveguide (22) formed within the silicon layer (39) having a main optical channel (46), first and second splitters (48, 50) at opposing ends of the main optical channel (46), first and second segments (52, 54) coupled to the first splitter (48), and third and fourth segments (56, 58) coupled to the second splitter (50), the main optical channel (46) having at least a 90 degree curve therein;
a fiber optic coil (14) having a first end coupled to third segment (56) of the waveguide (22) and a second end coupled to the fourth segment (58) of the waveguide (22);
a light source (16) coupled to the first segment (52) of the waveguide (22) to emit light into the waveguide (22) in a first direction, the waveguide (22) being configured such that the light propagates through the first segment (52), the first splitter (48), and the main optical channel (46) and is split into first and second portions by the second splitter (50) and the first and second portions respectively propagate through the third and fourth segments (56, 58) of the waveguide (22), around the fiber optic coil (14), and through the third and the main optical channel (46), the signal light propagating through the main optical channel (46) in a second direction and being split by the first splitter (48) such that at least some of the signal light is emitted from an end of the second segment (54);
a polarizer (41) coupled to the substrate (20) such that the signal light has traveled in only one polarization state during said propagation between the first splitter (48) and the second splitter (50); and
a photo-detector (24) formed on the substrate (20) and coupled to the second segment (54) of the waveguide (20) to capture the signal light and detect interference between the first and second portions of light, wherein the first portion of light and the second portion of light travel substantially equal optical path lengths between said splitting by the second splitter (50) and said capturing by the photo-detector (24) when the fiber optic coil (14) is not experiencing a rotation.
